# EUROPÄISCHE PATENTSCHRIFT

(11) **EP 4 466 149 B1**
(45) Veröffentlichungstag und Bekanntmachung des Hinweises auf die Patenterteilung: **19.11.2025**
(21) Anmeldenummer: 23707875.3
(22) Anmeldetag: 17.02.2023
(51) Int. Cl.: B60H 3/02, B60H 3/06, B60H 1/00, B61D 27/00

(54) **KLIMAGERÄT ZUM EINSATZ IN EINEM FAHRZEUG ZUR PERSONENBEFÖRDERUNG**
AIR-CONDITIONING DEVICE FOR USE IN A VEHICLE FOR PASSENGER TRANSPORT
DISPOSITIF DE CLIMATISATION DESTINÉ À ÊTRE UTILISÉ DANS UN VÉHICULE DESTINÉ AU TRANSPORT DE PASSAGERS

(30) Priorität: 11.03.2022 DE 102022202473
(43) Veröffentlichungstag der Anmeldung: 27.11.2024
(73) Patentinhaber: Siemens Mobility GmbH, 80997 München (DE); Siemens Mobility Austria GmbH, 1210 Wien (AT)
(72) Erfinder: PLINNINGER, Thomas, 83026 Rosenheim (DE); SCHELANDER-KLOPSCH, Christian, 1230 Wien (AT)
(74) Vertreter: Siemens Patent Attorneys
(86) Internationale Anmeldenummer: PCT/EP2023/054019
(87) Internationale Veröffentlichungsnummer: WO 2023/169801

(56) Entgegenhaltungen:
- EP-A2- 1 736 333
- CN-A- 112 572 109
- DE-U1- 8 226 125
- US-A1- 2021 331 551

## Beschreibung

Die Erfindung bezieht sich auf ein Klimagerät zum Einsatz in einem Fahrzeug zur Personenbeförderung, mit einem Außengehäuse zur Unterbringung von Komponenten des Klimagerätes, die einen als Radiallüfter ausgebildeten Zulüfter zum Fördern von konditionierter Zuluft in Richtung auf einen Fahrgastinnenraum eines Fahrzeugs umfasst.

Solche Klimageräte werden vielfach in Fahrzeugen zur Personenbeförderung, wie in Schienenfahrzeugen oder Bussen eingesetzt. Es ist ihre Aufgabe, für den Fahrgastinnenraum bestimmte Zuluft derart zu konditionieren, dass insbesondere einschlägige Qualitätsnormen für Fahrzeuge zur Personenbeförderung eingehalten werden.

Typischerweise setzt sich die konditionierte Zuluft, die in Richtung des Fahrgastinnenraums gefördert wird, aus angesaugter Frischluft und Umluft aus dem Fahrgastinnenraum zusammen. Insbesondere die Umluft kann Tröpfchen und/oder Aerosole enthalten, die virenhaltig oder mit sonstigen Krankheitserregern wie Bakterien oder Keinen belastet sind.

Zur Verminderung z. B. der Virenlast in der Zuluft für einen Fahrgastinnenraum eines Fahrzeugs ist es bekannt, hochwirksame Filter in der Zuluftstrecke (z.B. HEPA-Filter) einzusetzen, um Aerosole und/oder Tröpfchen abzuscheiden. Dies ist jedoch nicht zielführend, da mit dem Einbau des Filters ein erheblicher Druckverlust einhergeht, so dass ein Energieverbrauch zum Fördern der Zuluft sowie ein Geräuschpegel im System stark ansteigt. Hinzu kommt, dass diese Filter eine regelmäßige Reinigung erfordern bzw. in Intervallen gewechselt werden müssen.

Weitere Maßnahmen zur Reduzierung der Virenlast von Luft, wie UV-Lampen, elektrostatische Hochspannungsfilter usw. sind technisch schwer umsetzbar und schwanken stark in ihrer Wirksamkeit. Außerdem wirken sie sich unter anderem stark negativ auf den Energieverbrauch und Platzbedarf aus.

Auch ist es denkbar, für die Zuluft, die wie oben beschrieben, eine Mischluft aus Umluft und Frischluft ist, den Frischluftanteil zu Lasten des Umluftanteils zu erhöhen. Dies bringt jedoch den Nachteil, dass zunächst innerhalb des Klimagerätes keine Reduktion der Virenanzahl über eine erhöhte Frischluftmenge erfolgt, denn alle Virenpartikel aus der Umluft werden auch in die Mischluft transportiert. Zudem hat eine Erhöhung des Frischluftanteils in der Zuluft den Nachteil, dass der Energieverbrauch des Klimagerätes ansteigt, wobei insbesondere im Winter unter Umständen eine Reduktion der Innenraumluftfeuchte erfolgen kann, was sich nachteilig auf die Ausbreitung von Viren im Fahrgastinnenraum auswirken kann.

Das Dokument US 2021/331551 A1 offenbart ein gattungsgemäßes Klimagerät.

Ausgehend hiervon liegt der Erfindung die Aufgabe zugrunde, ein Klimagerät der eingangs genannten Art, derart weiterzuentwickeln, dass die von dem Klimagerät bereitgestellte Zuluft hinsichtlich ihrer Belastung mit Krankheitserregern vermindert ist.

Diese Aufgabe wird bei dem Klimagerät der eingangs genannten Art dadurch gelöst, dass der Zulüfter angesaugte Luft, bezogen auf eine Drehachse eines Laufrades des Zulüfters, derart nach Außen umlenkt, dass die Luft auf dem Zulüfter zugeordnete Innenflächenbereiche einer den Zulüfter radial umschließenden Einfassungsvorrichtung trifft, und diese Innenflächenbereiche der Einfassungsvorrichtung mit Adsorptionsstrukturen ausgestattet sind, die zum Abscheiden von Tröpfchen/Aerosolen (T) aus der umgelenkten Luft ausgebildet sind.

Die vorgesehen Adsorptionsstrukturen liegen somit im Strömungsweg der Zuluft, welche den Zulüfter unmittelbar verlassen hat. Die Adsorptionsstrukturen gestatten es, aus dem Zuluftstrom ggf. virenhaltige Tröpfchen/Aerosole abzuscheiden, so dass diese der Zuluft entzogen werden. In dieser Weise lässt sich eine möglicher Virenlast der Zuluft, die aus einer Kontamination der Umluft, die aus dem Fahrgastinnenraum in Richtung Klimagerät angesaugt wird, herrührt, wirksam vermindern.

Die Einfassungsvorrichtung kann bevorzugt an einen Luftkanalabschnitt angeschlossen sein, der zwischen dem Zulüfter und einer Auslassöffnung des Außengehäuses angeordnet ist. Diese Variante ist insbesondere dann sinnvoll, wenn das Klimagerät einen innen liegenden Luftkanal aufweist.

Alternativ ist es auch möglich, dass die Einfassungsvorrichtung in das Außengehäuse des Klimagerätes integriert ist. Diese Variante eignet sich für Bauformen des Klimagerätes ohne einen innen liegenden Luftkanal.

Die Drehachse des Laufrades des Zulüfters ist bevorzugt in einer Längsrichtung des Klimagerätes angeordnet ist. Dabei entspricht die Längsrichtung des Klimagerätes einer Hauptströmungsrichtung für die zu fördernde Luft. Alternativ kann der Zulüfter auch "liegend" im Klimagerät angeordnet sein, was ggf. weitere Strömungsleitelemente innerhalb des Klimagerätes erfordert, um die konditionierte Zuluft in ein zum Fahrgastinnenraum führendes Klimakanalsystem einzuleiten. Dabei ist die räumliche Anordnung der Erfassungsvorrichtung, die mit den Adsorptionsstrukturen ausgestattet ist, immer an die Positionierung des Zulüfters gekoppelt.

In einer Ausführungsform können die Adsorptionsstrukturen von einem Metallgeflecht gebildet sein. Eine solche Struktur ist gut geeignet, darauf Tröpfchen oder Aerosole abzuscheiden.

In einer anderen Ausführungsform sind die Adsorptionsstrukturen vorteilhafterweise als Stege ausgebildet. Diese sind bevorzugt quer zur Drehachse des Lüfters ausgerichtet. Diese Stege bilden Hindernisse für die den Zulüfter unmittelbar verlassende Zuluft und eignen sich somit zum Abscheiden von Tröpfchen und Aerosolen. Die Stege können untereinander in ihren Abmessungen (Länge, Höhe, Breite sowie Abstand zueinander) variieren, so dass eine, dem jeweiligen Volumenstrom sowie der jeweiligen Größenverteilung der Tröpfchen bzw. Aerosole angepasste, variable "Hindernisstruktur" für Tröpfchen und/oder Aerosole, die in der Zuluft enthalten sind, geschaffen wird.

Bevorzugt können die Adsorptionsstrukturen zwischen den Innenflächenbereichen der Erfassungsvorrichtung und einem ein Innengehäuse bildendes Lochblech angeordnet sein.

Bevorzugt ist eine Heizvorrichtung für die Adsorptionsstrukturen vorgesehen. Diese Heizvorrichtung ist vorteilhafterweise derart ausgelegt, dass in den Tröpfchen und/oder Aerosolen enthaltene Viren oder sonstige Krankheitserreger wirksam abgetötet werden. Geht man beispielshalber davon aus, dass die Luft im Fahrgastinnenraum mit SARS-CoV-2-Viren kontaminiert ist, so wird eine einzusetzende Heizeinrichtung so ausgelegt sein, dass sie zum Aufheizen der Adsorptionsstrukturen auf eine Temperatur von wenigstens 80°C geeignet ist.

Die Adsorptionsstrukturen können beispielsweise direkt über die Einfassungseinrichtung beheizt sein. Dies kann beispielsweise mittels einer Heizfolie realisiert sein, die auf den Innenflächenbereichen der Erfassungsvorrichtung zugeordneten Außenflächenbereichen angeordnet ist. Es ist jedoch ebenfalls denkbar, dass die Adsorptionsstrukturen, insbesondere, wenn sie von einem Metallgeflecht gebildet sind, integrierte Heizwendeln umfassen.

Die Einfassungsvorrichtung kann einen durchgehenden U-förmigen Querschnitt aufweisen und die Adsorptionsstrukturen können dann im Inneren der Einfassungsvorrichtung angeordnet sein. Bei dieser Ausführungsform kann die offene Seite der Einfassungsvorrichtung dem Zulüfter zugewandt und mittels eines Lochbleches abgedeckt sein. In diesem Fall ergibt sich der Vorteil, dass die Adsorptionsstrukturen nicht in einen Luftkanal hineinragen, in dem der Zulüfter angeordnet ist. Insofern bleibt eine allgemeine Luftströmung hin zum Zulüfter und vom Zulüfter weg in Richtung Fahrgastinnenraum im Wesentlichen unbeeinträchtigt. Das Lochblech kann bei der Variante mit Metallgeflecht zum Fixieren desselben dienen. Bei allen Ausführungsformen verbessert es die akustischen Eigenschaften des Klimageräts, da Luftverwirbelungen im Bereich der Einfassungsvorrichtung vermindert werden.

Ausführungsbeispiel der Erfindung werden nachfolgen unter Bezugnahme auf die Zeichnungen noch näher erläutert. Es zeigen:
- Figur 1: eine schematische perspektivische Ansicht eines Klimagerätes zum Einsatz bei einem Fahrzeug zur Personenbeförderung,
- Figur 2: eine schematische Längsschnittansicht eines Abschnitts des Klimagerätes von Figur 1,
- Figur 3: eine schematische Längsschnittansicht durch einen Zulüfter des Klimagerätes von Figur 1 umfassenden Bereich, in einer ersten Ausführungsform,
- Figur 4: eine schematische Querschnittsansicht entlang der Linie IV - IV von Figur 3,
- Figur 5: eine schematische Längsschnittansicht durch einen einen Zulüfter des Klimagerätes von Figur 1 umfassenden Bereich, in einer zweiten Ausführungsform,
- Figur 6: eine schematische Querschnittsansicht entlang der Linie VI - VI von Figur 5.

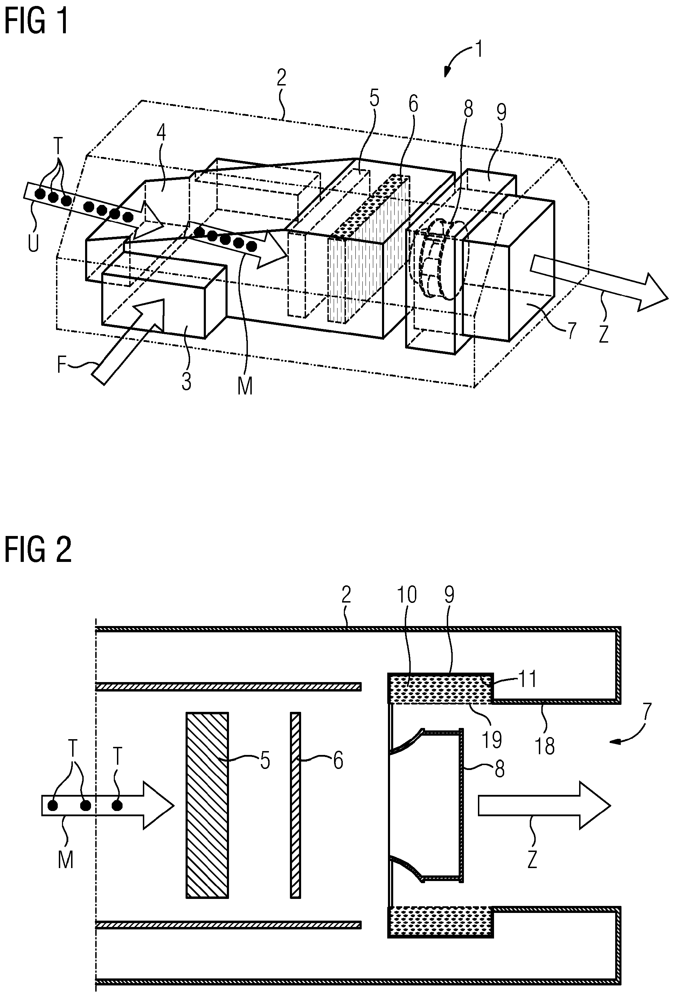

Figur 1 zeigt den allgemeinen Aufbau eines Klimagerätes 1, das zum Einsatz bei einem Fahrzeug zur Personenbeförderung ausgelegt ist. Dieses Klimagerät 1 wird typischer Weise auf einem Dach des Fahrzeugs, beispielsweise eines Schienenfahrzeugs oder eines Busses, montiert und steht über eine hier nicht gezeigte Klimakanalanordnung in einer Strömungsverbindung zu einem Fahrgastinnenraum des Fahrzeugs. Das Klimagerät 1 umfasst ein Außengehäuse 2, das mit einer Einlassöffnung 3 für Frischluft F aus der Umgebung des Fahrzeugs und einer Einlassöffnung 4 für aus dem Fahrgastinnenraum dem Klimagerät 1 zugeführte Umluft U. In geeigneten Anteilen werden die Umluft U und die Frischluft F im Klimagerät 1 zusammengeführt, so dass eine Umluftanteile und Frischluftanteile aufweisende Mischluft M entsteht, die im Klimagerät 1 beispielsweise hinsichtlich Temperatur und Feuchtegehalt konditioniert wird. Die Mischluft M gelangt dazu zunächst zu einem Verdampfer 5 eines Kältekreises und sodann zu einem Heizregister 6. Mit Hilfe des Verdampfers 5 und des Heizregisters 6 wird die Mischluft M so konditioniert, dass sie als Zuluft Z über eine Auslassöffnung 7 in den Fahrgastinnenraum eingeleitet werden kann. Ein Zulüfter 8 ist in dem Klimagerät 1 stromabwärts (saugende Anordnung) des Verdampfers 5 und des Heizregisters 6 angeordnet und fördert die konditionierte Zuluft Z durch die Auslassöffnung 7 in Richtung auf den Fahrgastinnenraum, vgl. Fig. 2. Alternativ könnte der Zulüfter 8 auch stromaufwärts von dem Verdampfer 5 und dem Heizregister 6 angeordnet sein (drückende Anordnung).

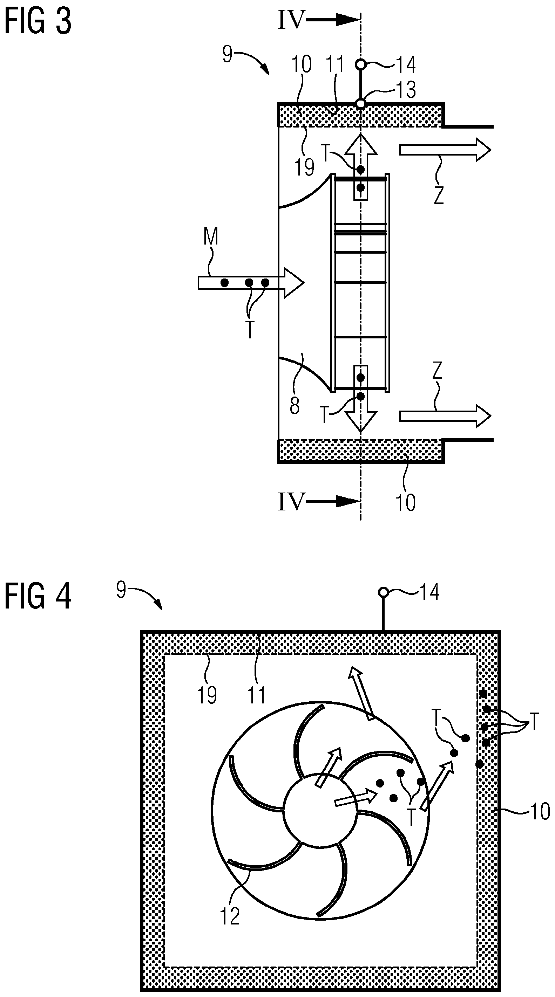

Des Weiteren ist im Inneren des Klimagerätes 1 eine Einfassungsvorrichtung 9 mit durchgehend U-förmigem Querschnitt vorgesehen, die den Zulüfter 8 radial vollständig umgibt. Im Inneren der Einfassungsvorrichtung 9 sind, wie anhand der Figuren 3 bis 6 erläutert wird, Adsorptionsstrukturen zum Abscheiden von Tröpfchen und/oder Aerosolen angeordnet. Eine offene Seite des U-förmigen Querschnitts der Einfassungsvorrichtung 9 ist dem Zulüfter 8 zugewandt.

Aus Figur 3 geht hervor, dass in der umlaufenden Einfassungsvorrichtung 9 ein die Adsorptionsstrukturen bildendes Metallgeflecht 10 angeordnet ist. Das Metallgeflecht 10 ist im Bereich von solchen Innenflächenbereichen 11 des Außengehäuses 2 angeordnet, auf die von einem Laufrad 12 des Zulüfters 8 umgelenkte Luft trifft. Die Ausdehnung der Innenflächenbereiche 11 in Strömungsrichtung entspricht wenigstens dem Doppelten der Ausdehnung des Laufrades 12 in derselben Richtung. Dabei ist das Laufrad 12 in Strömungsrichtung zentral zwischen den umlaufenden Innenflächenbereichen 11 angeordnet.

Es ist ersichtlich, dass anströmende Mischluft M durch den Zulüfter 8, bezogen auf eine Drehachse des Laufrades 12 des Zulüfters 8, nach außen umgelenkt wird, und zwar in Richtung auf das Metallgeflecht 10.

Dies wird auch in Figur 4 veranschaulicht. Es ist ersichtlich, dass in der Mischluft M enthaltene Tröpfchen oder Aerosole T in Richtung auf das Metallgeflecht 10 bewegt werden, und zwar durch die Drehbewegung eines Laufrades 12 des Zulüfters 8. Mit Krankheitserregern belastete Tröpfchen und/oder Aerosole T werden an dem Metallgeflecht 10 abgeschieden.

Aus Gründen der Übersichtlichkeit sind in den Figuren die Tröpfchen/Aerosole T nur teilweise mit Bezugszeichen bezeichnet.

Zum Abtöten der in dem Metallgeflecht 10 abgeschiedenen Krankheitserreger sind in das beispielsweise aus Stahlwolle gebildete Metallgeflecht 10 eine oder mehrere Heizwendeln 13 integriert, von denen aus Gründen der Übersichtlichkeit in den Figuren 2 und 3 jeweils nur eine beispielhafte Heizwendel 13 gezeigt ist. Eine Stromversorgung der Heizwendel 13 erfolgt über einen elektrischen Anschluss 14, der außerhalb der Einfassungsvorrichtung 9 angeordnet ist.

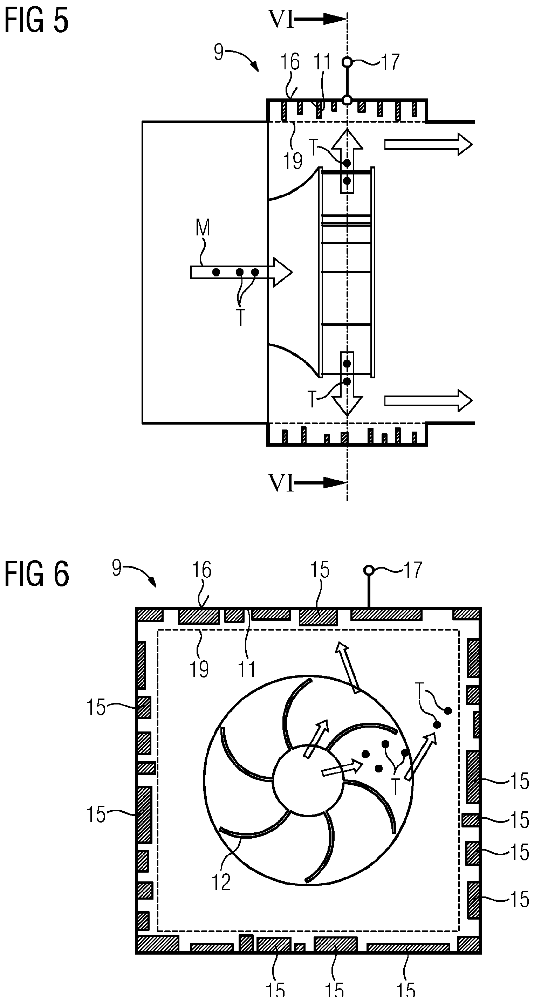

Anhand der Figuren 5 und 6 ist eine weitere Ausführungsform der Erfindung gezeigt, die sich von derjenigen, die anhand der Figuren 2 und 3 erläutert worden ist, ausschließlich durch die Art der in der Einfassungsvorrichtung 9 angeordneten Adsorptionsstrukturen und die Ausführung der Heizvorrichtung zum Abtöten der Krankheitserreger, wie Viren, Bakterien oder Keime, unterscheidet.

Im Einzelnen sind in der Einfassungsvorrichtung 9, ausgehend von den Innenflächenbereichen 11 des Außengehäuses 2, auf die die von dem Zulüfter 8 umgelenkte Luft trifft, vorzugsweise metallische Stege 15 angeordnet, die in ihren Abmessungen variieren und Hindernisse für die mit Krankheitserregern belastete Luft bilden. Auch die Stege 15 sind aus Gründen der Übersichtlichkeit nur teilweise mit Bezugszeichen bezeichnet. Die Stege 15 sind quer zur Strömungsrichtung der Luft ausgerichtet. Die Stege 15 bilden Hindernisse für Tröpfchen und/oder Aerosole T, die von dem Zulüfter 8 in Richtung der Innenflächenbereiche 11 umgelenkt werden.

Es ist ersichtlich, dass die Stege 15 sowohl in Querrichtung des Zulüfters 8 als auch in Strömungsrichtung der Mischluft M in ihren Abmessungen variieren, so dass verschiedene Arten von Hindernissen gebildet werden, die ein Abscheiden der Tröpfchen und/oder Aerosole T begünstigen.

Die Heizvorrichtung ist bei der Ausführungsform nach Figuren 5 und 6 als dünne Heizfolie 16 ausgebildet, die über einen elektrischen Anschluss 17 mit Strom versorgt ist. Die Heizfolie 16 ummantelt die Einfassungsvorrichtung 9.

Über die Heizfolie 16 oder eine im Metallgeflecht 10 integrierte Heizwendel 13 kann in regelmäßigen Abständen (Abstellung, Depot) das Metallgeflecht 10 sowie die umliegenden Oberflächen auf eine hohe Temperatur gebracht werden, um Viren aber auch Bakterien/Keime abzutöten. Während des Heizbetriebs des Klimagerätes 1 im Winter kann diese "Heizfunktion" u.U. sogar dauerhaft betrieben werden.

Was eine regelmäßige Reinigung der Adsorptionsstrukturen angeht, so ist ein Zugang zu diesem Bereich bzw. die umliegende Einfassungsvorrichtung 9 um den Zulüfter 8 bei Klimageräten immer gegeben, so dass eine einfache Reinigung des Bereichs bzw. im Bedarfsfall z. B. ein Austausch des Metallgeflechts 10 möglich ist.

Ein Luftkanalabschnitt 18 erstreckt sich von dem Zuluftauslass 7 in Richtung auf den Zulüfter 8 und begrenzt eine in diesem Bereich herrschende Luftströmung nach außen. An den Luftkanalabschnitt 18 ist die Einfassungsvorrichtung 9, welche den Zulüfter 8 radial umschließt, angeschlossen.

Den Ausführungsformen nach den Fig. 3 bis 6 ist gemeinsam, dass die jeweils in das Innere der Einfassungseinrichtung 9 eingesetzten Absorptionsstrukturen, nämlich das Metallgeflecht 11 bzw. die Stege 15 in Richtung auf den Zulüfter 8 begrenzt sind. Dazu fluchtet ein Lochblech 19 mit dem Luftkanalabschnitt 18. Insofern sorgt das vorgesehene Lochblech 19 dafür, dass eine Strömung der Luft im Bereich des Zulüfters 8 von den vorgesehenen Absorptionsstrukturen im Wesentlichen unbeeinflusst bleibt, d.h., die Absorptionsstrukturen bewirken keinen erheblichen zusätzlichen Strömungswiderstand für die Luftströmung oder Luftverwirbelungen im Bereich des Zulüfters 8.

## Patentansprüche

1. Klimagerät (1) zum Einsatz in einem Fahrzeug zur Personenbeförderung, mit einem Außengehäuse zur Unterbringung von Komponenten des Klimagerätes (1), die einen als Radiallüfter ausgebildeten Zulüfter (8) zum Fördern konditionierter Zuluft (Z) in Richtung auf einen Fahrgastinnenraum des Fahrzeugs umfassen, wobei
der Zulüfter (8) angesaugte Luft, bezogen auf eine Drehachse eines Laufrades (12) des Zulüfters (8), derart nach Außen umlenkt, dass die Luft auf dem Zulüfter (8) zugeordnete Innenflächenbereiche (11) einer den Zulüfter (8) radial umschließenden Einfassungsvorrichtung (9) trifft, **dadurch gekennzeichnet, dass** diese Innenflächenbereiche (11) der Einfassungsvorrichtung (9) mit Adsorptionsstrukturen ausgestattet sind, die zum Abscheiden von Tröpfchen/Aerosolen (T) aus der umgelenkten Luft ausgebildet sind.

2. Klimagerät (1) nach Anspruch 1,
**dadurch gekennzeichnet, dass**
die Einfassungsvorrichtung (9) an einen Luftkanalabschnitt (18) angeschlossen ist, der zwischen dem Zulüfter (8) und einer Auslassöffnung (7) der Einfassungsvorrichtung angeordnet ist.

3. Klimagerät (1) nach Anspruch 1,
**dadurch gekennzeichnet, dass**
die Einfassungsvorrichtung (9) in das Außengehäuse des Klimagerätes (1) integriert ist.

4. Klimagerät (1) nach einem der Ansprüche 1 bis 3,
**dadurch gekennzeichnet, dass**
die Drehachse des Laufrades (12) des Zulüfters (8) in einer Längsrichtung des Klimagerätes (1) angeordnet ist.

5. Klimagerät (1) nach einem der Ansprüche 1 bis 4,
**dadurch gekennzeichnet, dass**
die Adsorptionsstrukturen von einem Metallgeflecht (10) gebildet sind.

6. Klimagerät (1) nach einem der Ansprüche 1 bis 4,
**dadurch gekennzeichnet, dass**
die Adsorptionsstrukturen als Stege (15) ausgebildet sind.

7. Klimagerät (1) nach Anspruch 6,
**dadurch gekennzeichnet, dass**
die Stege (15) quer zur Strömungsrichtung der Luft ausgerichtet sind.

8. Klimagerät (1) nach Anspruch 6 oder 7,
**dadurch gekennzeichnet, dass**
die Stege (15) untereinander in ihren Abmessungen variieren.

9. Klimagerät (1) nach einem der Ansprüche 1 bis 8,
**dadurch gekennzeichnet, dass**
eine Heizvorrichtung zum Beheizen der Adsorptionsstrukturen vorgesehen ist.

10. Klimagerät (1) nach Anspruch 9,
**dadurch gekennzeichnet, dass**
die Heizvorrichtung als Folie ausgebildet ist, die auf eine den Innenflächenbereichen (11) zugeordneten Außenflächenbereichen der Einfassungsvorrichtung aufgebracht ist.

11. Klimagerät (1) nach Anspruch 9,
**dadurch gekennzeichnet, dass**
die Heizvorrichtung als in die Adsorptionsstrukturen integrierte Heizwendel (13) ausgebildet ist.

12. Klimagerät (1) nach einem der Ansprüche 1 bis 11,
**dadurch gekennzeichnet, dass**
die Einfassungsvorrichtung (9) einen durchgehenden U-förmigen Querschnitt aufweist und die Adsorptionsstrukturen im Inneren der Einfassungsvorrichtung (9) angeordnet sind.

13. Klimagerät (1) nach Anspruch 12,
**dadurch gekennzeichnet, dass**
die offene Seite der Einfassungsvorrichtung (9) dem Zulüfter (8) zugewandt und mittels eines Lochbleches (19) abgedeckt ist.

## Claims

1. Air-conditioning device (1) for use in a vehicle for passenger transport, with an outer housing for accommodating components of the air-conditioning device (1) that comprises a supply fan (8) configured as a radial fan for conveying conditioned supply air (Z) toward a passenger compartment of the vehicle,
wherein
the supply fan (8) deflects drawn-in air outward relative to an axis of rotation of an impeller (12) of the supply fan (8) in such a way that the air impinges on inner surface regions (11), associated with the supply fan (8), of an enclosing apparatus (9) radially surrounding the supply fan (8), **characterised in that** these inner surface regions (11) of the enclosing apparatus (9) are equipped with adsorption structures that are configured to separate droplets/aerosols (T) from the deflected air.

2. Air-conditioning device (1) according to claim 1,
**characterised in that**
the enclosing apparatus (9) is connected to an air duct portion (18) that is arranged between the supply fan (8) and an outlet opening (7) of the enclosing apparatus.

3. Air-conditioning device (1) according to claim 1,
**characterised in that**
the enclosing apparatus (9) is integrated in the outer housing of the air-conditioning device (1).

4. Air-conditioning device (1) according to one of claims 1 to 3,
**characterised in that**
the axis of rotation of the impeller (12) of the supply fan (8) is arranged in a longitudinal direction of the air-conditioning device (1).

5. Air-conditioning device (1) according to one of claims 1 to 4,
**characterised in that**
the adsorption structures are formed by a metal mesh (10).

6. Air-conditioning device (1) according to one of claims 1 to 4,
**characterised in that**
the adsorption structures are configured as ribs (15).

7. Air-conditioning device (1) according to claim 6,
**characterised in that**
the ribs (15) are oriented transversely of the direction of airflow.

8. Air-conditioning device (1) according to claim 6 or 7,
**characterised in that**
the ribs (15) differ from one another in their dimensions.

9. Air-conditioning device (1) according to one of claims 1 to 8,
**characterised in that**
a heating apparatus is provided for heating the adsorption structures.

10. Air-conditioning device (1) according to claim 9,
**characterised in that**
the heating apparatus is configured as a foil that is applied to outer surface regions associated with the inner surface regions (11) of the enclosing apparatus.

11. Air-conditioning device (1) according to claim 9,
**characterised in that**
the heating apparatus is configured as a heating coil (13) integrated in the adsorption structures.

12. Air-conditioning device (1) according to one of claims 1 to 11,
**characterised in that**
the enclosing apparatus (9) has a U-shaped cross-section throughout and the adsorption structures are arranged in the interior of the enclosing apparatus (9).

13. Air-conditioning device (1) according to claim 12,
**characterised in that**
the open side of the enclosing apparatus (9) faces toward the supply fan (8) and is covered by way of a perforated plate (19).

## Revendications

1. Appareil (1) de climatisation à utiliser dans un véhicule de transport des passagers, comprenant une enveloppe extérieure pour le logement de composants de l'appareil (1) de climatisation, qui comprennent un ventilateur (8) refoulant constitué en ventilateur radial pour le transport d'air (Z) affluent conditionné en direction d'un espace intérieur réservé aux passagers du véhicule, dans lequel
l'air aspiré par le ventilateur (8) refoulant est, rapporté à un axe de rotation de l'impulseur (12) du ventilateur (8) refoulant, dévié vers l'extérieur, de manière à ce que l'air frappe des zones (11) de surfaces intérieures affectées au ventilateur (8) refoulant d'un dispositif (9) d'encadrement entourant radialement le ventilateur (8) refoulant, **caractérisé en ce que** les parties (11) de surfaces intérieures du dispositif (9) d'encadrement sont équipées de structures d'adsorption, qui sont constituées pour le dépôt de goulettes/aérosol (T) de l'air dévié.

2. Appareil (1) de climatisation suivant la revendication 1,
**caractérisé en ce que**
le dispositif (9) d'encadrement est raccordé à un tronçon (18) de conduit pour de l'air, qui est monté entre le ventilateur (8) refoulant et une ouverture (7) de sortie du dispositif d'encadrement.

3. Appareil (1) de climatisation suivant la revendication 1,
**caractérisé en ce que**
le dispositif (9) d'encadrement est intégré dans l'enveloppe extérieure de l'appareil (1) de climatisation.

4. Appareil (1) de climatisation suivant l'une des revendications 1 à 3,
**caractérisé en ce que**
l'axe de rotation de l'impulseur (12) du ventilateur (8) refoulant est disposé dans une direction longitudinale de l'appareil (1) de climatisation.

5. Appareil (1) de climatisation suivant l'une des revendications 1 à 4,
**caractérisé en ce que**
les structures d'absorption sont formées par une toile (10) métallique.

6. Appareil (1) de climatisation suivant l'une des revendications 1 à 4,
**caractérisé en ce que**
les structures d'absorption sont constituées sous la forme d'entretoises (15).

7. Appareil (1) de climatisation suivant la revendication 6,
**caractérisé en ce que**
les entretoises (15) sont dirigées transversalement à la direction d'écoulement de l'air.

8. Appareil (1) de climatisation suivant la revendication 6 ou 7,
**caractérisé en ce que**
les entretoises (15) varient entre elles dans leurs dimensions.

9. Appareil (1) de climatisation suivant l'une des revendications 1 à 8,
**caractérisé en ce qu'**
il est prévu un dispositif de chauffage pour chauffer les structures d'absorption.

10. Appareil (1) de climatisation suivant la revendication 9,
**caractérisé en ce que**
le dispositif de chauffage est constitué sous la forme d'une feuille, qui est déposée sur des zones de surfaces extérieures, affectées à l'une des zones (11) de surfaces intérieures du dispositif d'encadrement.

11. Appareil (1) de climatisation suivant la revendication 9,
**caractérisé en ce que**
le dispositif de chauffage est constitué sous la forme d'une spirale (13) chauffante intégrée aux structures d'absorption.

12. Appareil (1) de climatisation suivant l'une des revendications 1 à 11,
**caractérisé en ce que**
le dispositif (9) d'encadrement a une section transversale traversante en forme de U et les structures d'absorption sont disposées à l'intérieur du dispositif (9) d'encadrement.

13. Appareil (1) de climatisation suivant la revendication 12,
**caractérisé en ce que**
le côté ouvert du dispositif (9) d'encadrement est tourné vers le ventilateur (8) refoulant et est recouvert d'une tôle (19) perforée.
